# EUROPÄISCHE PATENTSCHRIFT

(11) **EP 2 100 815 B1**
(45) Veröffentlichungstag und Bekanntmachung des Hinweises auf die Patenterteilung: **22.08.2012**
(21) Anmeldenummer: 09003449.7
(22) Anmeldetag: 10.03.2009
(51) Int. Cl.: B65C 9/04

(54) **Gebindehandhabungseinrichtung, Etikettierkarussell und Verfahren zum Beschichten der Umfangsfläche von Gebinden**
Container handling device, label carousel and method for coating the peripheral area of containers
Dispositif de manipulation de gerbe, carrousel d'étiquetage et procédé de revêtement de la surface circonférentielle de gerbes

(30) Priorität: 10.03.2008 DE 102008013380
(43) Veröffentlichungstag der Anmeldung: 16.09.2009
(73) Patentinhaber: Krones AG, 93073 Neutraubling (DE)
(72) Erfinder: Hausladen, Wolfgang, 93099 Mötzing (DE)

(56) Entgegenhaltungen:
- WO-A1-98/16432
- DE-A1- 19 816 239

## Beschreibung

Die Erfindung betrifft eine Gebindehandhabungseinrichtung nach dem Oberbegriff des Anspruchs 1 und wie aus der EP 1 167 213 A1 bekannt, ein Etikettierkarussell nach dem Oberbegriff des Anspruchs 10, eine Etikettiermaschine, ein Gebindebearbeitungszentrum und ein Verfahren zum Beschichten der Umfangsoberfläche von Gebinden.

Bei der Ausgestaltung von Gebindeetikettiermaschinen werden die zu etikettierenden Gebinde (Flaschen, Dosen, Kartons oder dgl. Artikel) herkömmlicherweise vor oder nach Befüllung an einem oder mehreren Etikettieraggregaten vorbeigeführt, wobei die gewünschten Etiketten und/oder Beschriftungen auf die Umfangsoberfläche des Gebindes aufgebracht werden. Die Gebindeführung erfolgt dabei typischerweise gleichmäßig beabstandet auf einer vorgegebenen Kreisbahn mit konstantem Radius um die zentrale Rotationsachse eines drehbar antreibbaren Gebindehalters, wobei die Gebinde um die eigene Achse drehbar geführt werden, um eine Aufbringung von Etiketten auf die Gebindeumfangsoberfläche zu ermöglichen.

Die Gebindeführung kann durch Tragen des oberen Gebindeteils, wie es in Dokument EP 1 167 213 A1, EP 1 251 074 A2 oder DE 41 25 579 A1 offenbart ist, oder durch Tragen auf einem unterhalb des Gebindes angeordneten Teller erfolgen, wie es beispielsweise aus den Dokumenten DE 31 37 201 A1 und DE 197 41 476 A1 bekannt ist. Die DE 41 41 284 A1 schlägt eine Gebindeführung auf einer Kreisbahn mit konstantem Radius vor, die eine positionsbezogene Etikettierung von Gebinden unterschiedlichen Durchmessers ermöglicht.

Die Gebindeführung auf einer vorgegebenen Kreisbahn mit konstanter Kreisteilung ist insofern nachteilig, als die Gebindeaufnahme und -abgrabe in derselben Taktung zu erfolgen haben, so dass die Gebindezuführung und/oder -abführung an das Etikettieraggregat aufwendig angepaßt werden müssen, was beispielsweise den Einbau von Anpassungselementen, wie Ein-/Auslaufsterne oder-schnecken mit veränderlichem Teilungsmaß, oder Gebindespeichern erfordern kann.

Ferner ist eine Gebindeführung auf einer vorgegebenen Kreisbahn mit konstanter Kreisteilung insofern nachteilig, als in Abhängigkeit von der Etikettier- oder Beschriftungsaufgabe die Kreisteilung aufgrund der Variation der Anzahl der Etikettieraggregate anzupassen ist. Bei einem Etikettierkarussell mit konstanter Kreisteilung ist eine Anpassung der Kreisteilung nur mit hohem Aufwand möglich.

Ein weiterer Nachteil der Gebindeführung auf einer vorgegebenen Kreisbahn besteht darin, dass stets eine von null verschiedene Relativgeschwindigkeit des zu etikettierenden Gebindes zu einer ortsfest installierten Etikettiereinrichtung besteht. Dies begrenzt naturgemäß das für den Etikettiervorgang zur Verfügung stehende Zeitfenster und schränkt ferner die Möglichkeiten der Anordnung des Gebindes zum Etikettieraggregat unvorteilhaft ein. Dadurch kann eine Etikettierung mit beispielsweise großformatigen Etiketten erschwert oder unmöglich sein, d.h. die maximale Etikettenlänge ist eng begrenzt.

Der Erfindung liegt daher die Aufgabe zugrunde, eine gattungsgemäße Gebindehandhabungseinrichtung derart weiterzubilden, dass eine Taktung von Gebindezuführung und -abführung frei gestaltbar ist. Weitere Aspekte der Erfindung sind, ein gattungsgemäßes Etikettierkarussell oder eine gattungsgemäße Etikettiermaschine oder ein gattungsgemäßes Gebindebearbeitungszentrum oder ein gattungsgemäßes Verfahren zum Beschichten der Umfangsoberfläche von Gebinden derart weiterzubilden, dass eine Taktung von Gebindezuführung und -abführung frei gestaltbar ist. Darüber hinaus ist es ein Aspekt der Erfindung, den räumlichen und zeitlichen Ablauf des Etikettier- und/oder Beschriftungsvorgangs von Gebinden vorteilhaft zu verbessern. Ferner ist es ein Aspekt der vorliegenden Erfindung, die Aufbringung von Etiketten und/oder Druckbildern von unterschiedlichem Format auf die Umfangsoberfläche von Gebinden zu verbessern. Ein weiterer Aspekt der vorliegenden Erfindung ist, die Beschichtung/Etikettierung von Gebinden unterschiedlichster Form mit großflächigen Etiketten und/oder Druckbildern unterschiedlicher Formate zu verbessern.

Diese Aufgaben und/oder Aspekte werden durch die Gebindehandhabungseinrichtung mit den Merkmalen des Anspruchs 1, das Etikettierkarussell mit den Merkmalen des Anspruchs 10, die Etikettiermaschine mit den Merkmalen des Anspruchs 11, das Gebindebearbeitungszentrum mit den Merkmalen des Anspruchs 13 und das Verfahren zum Beschichten der Umfangsfläche von Gebinden mit den Merkmalen des Anspruchs 17 gelöst.

Erfindungsgemäß wird eine Gebindehandhabungseinrichtung mit einer um eine erste Drehachse drehbar antreibbaren Gebindeaufnahmeeinrichtung zum drehbar tragenden Führen von Gebinden vorgeschlagen, wobei die erste Drehachse mit einer Rotationsachse des mittels der Gebindeaufnahmeeinrichtung drehbar antreibbaren Gebindes zusammenfällt und entlang einer geschlossenen Umlaufbahn führbar ist, wobei die Gebindehandhabungsvorrichtung mittels einer gesteuert betätigbaren Koppeleinrichtung an einem um eine dritte Drehachse umlaufenden Träger bzw. Karussell derart gelagert ist, dass die erste Drehachse sowohl bezüglich ihrer radialen als auch umfänglichen Position relativ zum umlaufenden Träger so gesteuert verlagerbar ist, dass ihre Umlaufbahn zumindest abschnittsweise von einer Kreisbogenform abweichend ausführbar ist.

Bevorzugt sind die radiale Position und die umfängliche Position der ersten Drehachse der Gebindehandhabungseinrichtung jeweils unabhängig voneinander relativ zum Träger steuerbar. Dies kann durch mechanische Steuereinrichtungen wie Kurvengetriebe oder dgl. erfolgen, bevorzugt jedoch über programmierbare Stellantriebe wie beispielsweise Servomotore, die in Verbindung mit einer geeigneten Steuerung eine hohe Variabilität in der Umlaufbahngestaltung ermöglichen.

Zur Erzielung hoher Leistungen kann der Träger mit gleichbleibendem Umlaufsinn kontinuierlich um seine Drehachse angetrieben werden, während insbesondere die umfängliche Position der ersten Drehachse auf ihrer Umlaufbahn diskontinuierlich verlagerbar ist. Ebenfalls zum Zwecke der Leistungssteigerung können am Umfang des Trägers verteilt mehrere steuerbare Koppeleinrichtungen für eine Vielzahl von Gebindehandhabungseinrichtungen vorgesehen werden. Der Träger bildet somit ein rotierendes Karussell.

Gemäß einer vorteilhaften Ausführung ist die Gebindehandhabungseinrichtung erstmalig um eine zweite Drehachse drehbar antreibbar, wobei die zweite Drehachse der Gebindehandhabungseinrichtung von der ersten Drehachse der Gebindeaufnahmeeinrichtung beabstandet ist. Somit ist die erste Drehachse auf einer ersten Kreisbahn um die zweite Drehachse beliebig positionierbar. Weiter ist die zweite Drehachse auf einer zweiten, insbesondere als Kreisbahn ausgebildeten, Bahn um eine dritte Drehachse positionierbar, und die erste Drehachse, die zweite Drehachse und die dritte Drehachse sind parallel zueinander orientierbar. Dabei ist sowohl der Radius der ersten Kreisbahn als auch der Radius der zweiten Kreisbahn von null verschieden.

Hierbei ist erstmalig vorgesehen, eine drehbar antreibbare Gebindeaufnahmeeinrichtung nicht nur auf eine zweite Kreisbahn um eine dritte Drehachse beschränkt positionierbar zu gestalten. Vielmehr ist die drehbar antreibbare Gebindeaufnahmeeinrichtung um die zweite Drehachse der Gebindehandhabungseinrichtung drehbar antreibbar, wobei die zweite Drehachse von der ersten Drehachse der Gebindeaufnahmeeinrichtung beabstandet und auf der zweiten Kreisbahn um eine dritte Drehachse positionierbar ist.

Durch die erfindungsgemäße Gebindehandhabungseinrichtung wird die Positionierungsfreiheit eines drehbar antreibbaren Gebindes im Rahmen eines Gebindehandhabungsvorgangs wesentlich erhöht. Darüber hinaus wird die Positionierungsfreiheit eines drehbar antreibbaren Gebindes in Bezug auf die dritte Drehachse dahingehend erhöht, dass der Abstand der ersten Drehachse des Gebindes zur dritten Drehachse gesteuert veränderbar ist.

Vorteilhafte Weiterbildungen des erfindungsgemäßen Gebindehandhabungseinrichtung und des erfindungsgemäßen Verfahrens sind Gegenstand der abhängigen Ansprüche 2 bis 6.

So kann die erfindungsgemäße Gebindehandhabungseinrichtung ein Stützelement zwischen der ersten und zweiten Drehachse aufweisen. Dabei hat die Abmessung des Stützelements einen Einfluß auf den Abstand zwischen der ersten und zweiten Drehachse. Durch den Einbau von Stützelementen unterschiedlicher Abmessungen in die Gebindehandhabungseinrichtung wird die Voreinstellung unterschiedlicher Abstände zwischen der ersten und zweiten Drehachse ermöglicht.

Ferner ist es vorteilhaft, wenn mittels des Stützelements der Abstand zwischen der ersten und zweiten Drehachse veränderbar ist. Dieser Abstand kann beispielsweise durch Längenänderung des Stützelements veränderbar sein. Hierdurch entsteht ohne aufwendigen Austausch von Systemkomponenten ein weiterer Freiheitsgrad bezüglich der Gebindehandhabungseinrichtung, wodurch die Positionierungsfreiheit der Gebindehandhabungseinrichtung weiter verbessert wird.

Ferner kann die Gebindeaufnahmeeinrichtung als eine Gebindehalsgabel ausgestaltet sein, die ein konstruktiv einfaches Tragen des Gebindes am oberen Gebindeteil ermöglicht.

Darüber hinaus kann die Gebindeaufnahmeeinrichtung als ein Gebindebodenteller ausgestaltet sein, der ein Tragen des Gebindes durch Unterstützen des Gebindebodens ermöglicht. Hierdurch wird das Tragen von schweren oder für die Anwendung einer Gebindehalsgabel nicht geeigneter Gebindegestaltungen wie z.B. Glasflaschen ermöglicht.

Ein drehbar antreibbares Drehelement der Gebindehandhabungseinrichtung kann als ein Schwenkarm konstruktiv einfach, gewichtssparend und kostengünstig ausgestaltet sein.

Die Aufgabe wird ferner durch das erfindungsgemäße Etikettierkarussell gelöst, das eine Rotationsachse aufweist, die mit der dritten Drehachse zusammenfällt, wobei das Etikettierkarussell um die dritte Drehachse drehbar antreibbar ist. Das als Gebindeträger oder Gebindetisch ausgestaltbare Etikettierkarussell weist eine Mehrzahl von drehbar antreibbaren Gebindeaufnahmeeinrichtungen zum drehbar tragenden Führen von Gebinden auf, wobei die erste Drehachse mit der Rotationsachse des mittels der Gebindeaufnahmeeinrichtung drehbar antreibbaren Gebindes zusammenfällt. Dabei sind die Gebindeaufnahmeeinrichtungen hinsichtlich deren jeweils ersten Drehachse auf einer konzentrisch zur dritten Drehachse des Etikettierkarussells angeordneten Kreisbahn positionierbar. Weiter sind die Gebindeaufnahmeeinrichtungen hinsichtlich deren jeweils ersten Drehachse mit einer konstanten Kreisteilung auf der zweiten Kreisbahn positionierbar.

Erstmalig weist dabei das Etikettierkarussell wenigstens eine erfindungsgemäße Gebindehandhabungseinrichtung mit einer gesteuert betätigbaren Koppelungseinheit zur sowohl radialen als auch umfänglichen Verlagerung der Position der ersten Drehachse relativ zum Karussell auf, wodurch die erste Drehachse zumindest abschnittsweise auf einer von einer Kreisbogenform abweichenden Umlaufbahn gesteuert geführt werden kann. Dabei ist die drehbar antreibbare Gebindeaufnahmeeinrichtung der Gebindehandhabungseinrichtung bevorzugt auf einer konzentrisch zu einer zweiten Drehachse der Gebindehandhabungseinrichtung beweglichen, ersten Kreisbahn beliebig positionierbar.

Erfindungsgemäß lässt sich somit die Gebindehandhabung mittels des Etikettierkarussells gleich in mehreren Aspekten deutlich verbessern. Zum einen können Gebinde von einer Zuführeinrichtung mit einer Teilung abgenommen werden, die von einer Teilung der Abführeinrichtung abweicht. Somit ist es nicht erforderlich, die Gebindezuführung bzw. - abführung beispielsweise durch den Einbau von Anpassungselementen oder Gebindespeichern an eine vor- oder nachgeschaltete Systemkomponente anzupassen.

Zum anderen ist es von Vorteil, dass, wenn eine Anpassung oder Variierung der Kreisteilung beispielsweise durch Änderung des Etikettiervorgangs oder Gebindewechsel erforderlich ist, ein aufwendiger Umbau des Etikettierkarussells entfällt.

Des Weiteren gelten alle für die erfindungsgemäße Gebindehandhabungseinrichtung aufgeführten Vorteile in analoger Weise für das erfindungsgemäße Etikettierkarussell.

Bevorzugt ist eine erste Drehachse auf einer ersten Bahn positionierbar, wobei die erste Bahn konzentrisch um eine zweite Drehachse angeordnet ist. Die zweite Drehachse ihrerseits ist auf einer zweiten Bahn positionierbar, wobei die zweite Bahn konzentrisch um eine dritte Drehachse angeordnet ist. Sowohl die erste Bahn als auch die zweite Bahn können Kreisbahnen beschreiben. Wenigstens eine davon kann jedoch auch wenigstens abschnittsweise eine elliptische oder lineare Bahn beschreiben. Folglich kann die erste Drehachse hinsichtlich der dritten Drehachse eine Vielzahl von möglichen Bewegungsbahnen beschreiben, die beispielsweise wenigstens abschnittsweise elliptische oder lineare Bahnen verwirklichen oder zumindest Abschnitte von Evoluten, Evolventen, Zykloiden, Epizykloiden, Hypozykloiden, Kardioiden oder Astroiden enthalten. Nichtkreisförmige Umlaufbahnabschnitte für die erste Drehachse der Gebindehandhabungseinrichtung sind aber auch durch andersartig ausgebildete Koppeleinrichtungen erzielbar, z.B. rechtwinklig (radial und tangential) angeordnete Linearachsen, die beispielsweise in der Umlaufebene des einen Träger bildenden Karussells liegen und mit diesem mitgeführt werden.

Die Aufgabe wird weiter durch die erfindungsgemäße Etikettiermaschine gelöst, wobei die Etikettiermaschine erstmalig wenigstens eine erfindungsgemäße Gebindehandhabungseinrichtung oder ein erfindungsgemäßes Etikettierkarussell aufweist.

Hieraus ergibt sich der Vorteil, daß die Gebindeführung bei laufendem Etikettiervorgang nicht mehr auf die herkömmliche Kreisbahn beschränkt ist, sondern erstmals in veränderbarem Abstand zur Rotationsachse eines drehbar antreibbaren Gebindeträgers ermöglicht wird. Aus der Überlagerung der Bewegungen des eigentlichen Etikettierkarussells und der mittels der Koppeleinrichtungen daran gelagerten Gebindehandhabungseinrichtung können erstmalig zusätzlich zur herkömmlichen Kreisbahn neue Bewegungsbahnen, wie beispielsweise wenigstens abschnittsweise elliptische oder lineare Bahnen, oder wenigstens Abschnitte von Evoluten, Evolventen, Zykloiden, Epizykloiden, Hypozykloiden, Kardioiden oder Astroiden vorteilhaft verwirklicht werden.

Ferner ist es vorteilhaft, wenn die erfindungsgemäße Etikettiermaschine wenigstens eine Beschichtungseinrichtung aufweist. Eine Beschichtungseinrichtung im Sinne der Erfindung umfasst eine Aufbringungseinrichtung zum Aufbringen von flächigen Folienelementen, wie beispielsweise Papier- oder Kunststoffetiketten, auf die Umfangsoberfläche eines Gebindes. Des Weiteren umfasst eine Beschichtungseinrichtung im Sinne der Erfindung eine Gebindebeschriftungseinrichtung zum ggf. berührungslosen Bedrucken oder Gravieren der Umfangsoberfläche eines Gebindes, beispielsweise mittels Tintenstrahl-, Lasertechnik oder dergleichen. Hierbei ermöglicht die erfindungsgemäße Gebindehandhabungseinrichtung, daß die Gebinde derart an eine Beschichtungseinrichtung herangeführt werden, daß Abstand und Relativgeschwindigkeit des Gebindes zur Beschichtungseinrichtung beliebig wählbar sind. Dadurch wird die Anordnung des Gebindes gegenüber einer Beschichtungseinrichtung oder sonstigen Einrichtung optimiert, da erforderlichenfalls auch ein vorübergehender Stillstand eines Gebindes bei gleichzeitiger Drehung um seine Rotationsachse realisierbar ist, um es bedarfsweise auch vollumfänglich behandeln zu können. Dadurch kann bei einer Tintenstrahlanwendung ein für die gesamte Sprühdauer konstanter Zwischenabstand zur Gebindeoberfläche realisiert werden.

Ferner wird es durch die erfindungsgemäße Etikettiermaschine erstmalig möglich, dass ein Gebinde in beliebiger Richtung an der Beschichtungseinrichtung vorbeigeführt werden kann. Darüber hinaus lässt sich wie erwähnt erstmalig verwirklichen, dass ein Beschichtungsvorgang durchgeführt wird, bei dem die Drehachse des Gebindes relativ zur Beschichtungseinrichtung zeitweilig ortsfest gehalten wird, also sich nicht bewegt, d.h. ein "Schweben" des Gebindes in der Nähe einer Beschichtungseinrichtung verwirklicht wird. Dies verbessert oder ermöglicht auch die Lösung schwieriger Etikettieraufgaben, z.B. das Aufbringen großformatiger, überlanger oder kompliziert gestalteter Etiketten.

Die Überlagerung der Drehbewegungen des Etikettierkarussells und der erfindungsgemäßen Gebindehandhabungseinrichtung in der erfindungsgemäßen Etikettiermaschine ermöglicht ferner, den zeitlichen Ablauf der Transport- und Beschichtungsvorgänge weiter zu verbessern. So können beispielsweise die Zeitfenster bei der Gebindeaufnahme, -beschichtung und - abgabe durch gegenläufige Drehbewegungen des erfindungsgemäßen Etikettiertellers und der erfindungsgemäßen Gebindehandhabungseinrichtung vorteilhaft variiert, insbesondere vergrößert werden. Weiter kann die für den reinen Gebindetransport in der Etikettiermaschine erforderliche Zeit durch einen schnelleren Gebindetransport variiert, insbesondere verkürzt werden. Dies kann z.B. durch gleichläufige oder gegenläufige Drehbewegungen des erfindungsgemäßen Etikettierkarussells und der erfindungsgemäßen Gebindehandhabungseinrichtung erzielt werden.

Darüber hinaus erlaubt eine geeignete Steuerung der überlagerten Dreh-Linearbewegungen der Gebindehandhabungseinrichtung und der Drehbewegungen des Etikettierkarussells der erfindungsgemäßen Etikettiermaschine, eine Kollision der Gebindehandhabungseinrichtung mit weiteren Bauteilen der Etikettiermaschine oder Bauteilen benachbarter Systemkomponenten, beispielsweise mit einem Füllventil einer angrenzenden Füllmaschine, vorteilhaft zu vermeiden.

Des Weiteren gelten alle für die erfindungsgemäße Gebindehandhabungseinrichtung und das erfindungsgemäße Etikettierkarussell aufgeführten Vorteile in analoger Weise für die erfindungsgemäße Etikettiermaschine.

Die Aufgabe wird ferner durch ein erfindungsgemäßes Gebindebearbeitungszentrum, das beispielsweise eine Gebindeherstellungseinrichtung und einen Gebindefüller/-verschließer aufweist, gelöst. Dabei weist das Gebindebearbeitungszentrum erstmals wenigstens eine erfindungsgemäße Etikettiermaschine mit einem erfindungsgemäßen Etikettierkarussell auf.

Dabei ist es vorteilhaft, wenn das erfindungsgemäße Etikettierkarussell direkt als Schnittstelle zur vor- bzw. nachgeschalteten Systemkomponente des Gebindebearbeitungszentrums verwendet wird. Dadurch kann auf den Einsatz aufwendiger, teurer und wartungsintensiver Gebindeübergabeeinrichtungen wie Transfersternräder mit ggf. variablem Teilungsmaß oder dgl., die bislang den einzelnen Systemkomponenten zwischengeschaltet wurden, verzichtet werden.

Weiter vorteilhaft ist, wenn die erfindungsgemäße Etikettiermaschine zur Blockung des erfindungsgemäßen Gebindebearbeitungszentrums verwendbar ist. Hierbei kann zusätzlich der Einbau aufwendiger Gebindezuführ- bzw. -abführeinrichtungen, wie beispielsweise Transportsteme oder Transportschnecken, vermieden werden. Durch eine Blockung ist eine Beschränkung ausschließlich auf wertschöpfende Funktionen wie beispielsweise Blasen, Etikettieren, Bedrucken, Füllen und Verschließen beschränkbar. Nicht wertschöpfende Transportelemente sind damit weitgehend entbehrlich.

Das erfindungsgemäße Gebindebearbeitungszentrum kann ferner einen Gebindespeicher aufweisen, der mittels des erfindungsgemäßen Etikettierkarussells beschick- und entleerbar ist. Dieser erhöht die Flexibilität und Effizienz des Gebindebearbeitungszentrums vorteilhaft. Ein Gebindespeicher kann beispielsweise die Gebinde, die aufgrund einer Systemkomponentenstörung von der nachgeschalteten Komponente nicht aufgenommen werden können, zwischenspeichern und sie nach Behebung der Störung wieder abgeben. Ferner erlaubt ein Gebindespeicher, Unterschiede in der Gebinde-Verarbeitungsgeschwindigkeit zwischen zwei Systemkomponenten zumindest vorübergehend auszugleichen, indem beispielsweise in Abhängigkeit der momentanen Leistungsdifferenz benachbarter Systemkomponenten in regelmäßigen Abständen Gebinde in den Gebindespeicher ein- oder aus diesem ausgegeben werden. Die dadurch entstehenden Teilungsverluste bzw. -hinzufügungen können durch eine im Lauf angepasste Bewegungssteuerung der unmittelbar benachbarten Gebindehandhabungseinrichtungen kompensiert werden.

Des Weiteren gelten alle für die erfindungsgemäße Gebindehandhabungseinrichtung, den erfindungsgemäßen Etikettierteller und die erfindungsgemäße Etikettiermaschine aufgeführten Vorteile in analoger Weise für das erfindungsgemäße Gebindebearbeitungszentrum.

In verfahrenstechnischer Hinsicht wird die Aufgabe durch das erfindungsgemäße Verfahren zum Beschichten der Umfangsoberfläche von Gebinden gelöst. Dabei weist das Verfahren die Schritte auf: Zuführen einer Mehrzahl von Gebinden zur erfindungsgemäßen Etikettiermaschine, Aufnahme der Gebinde am erfindungsgemäßen Etikettierteller, Zuführen der Gebinde zu wenigstens einer Beschichtungseinrichtung, Beschichtung der Gebinde mittels wenigstens einer Beschichtungseinrichtung und Abführen der Gebinde aus der erfindungsgemäßen Etikettiermaschine.

Für das erfindungsgemäße Verfahren gelten alle für die vorstehend diskutierten, erfindungsgemäßen Einrichtungen aufgeführten Vorteile in analoger Weise.

Beim erfindungsgemäßen Verfahren kann das Gebinde auf einer Bahn geführt werden, die bevorzugt durch eine Drehbewegung des erfindungsgemäßen Etikettiertellers und eine dazu überlagerte Drehbewegung der erfindungsgemäßen Gebindehandhabungseinrichtung bestimmt wird. Die Bewegungsüberlagerung erlaubt das Führen des Gebindes auf einer wenigstens abschnittsweise kreisförmigen oder nichtkreisförmigen, z.B. elliptischen oder linearen Bahn. Ferner ist eine frei wählbare Kombination dieser realisierbar. Damit können in vorteilhafter Weise erstinalig komplexe Bahngeometrien realisiert werden, die z.B. wenigstens abschnittsweise Evoluten, Evolventen, Zykloiden, Epizykloiden, Hypozykloiden, Kardioiden oder Astroiden enthalten. Somit wird eine größtmögliche Flexibilität bei der räumlichen Gebindeführung geschaffen.

Weiter kann beim erfindungsgemäßen Verfahren das Gebinde in einer beliebig wählbaren Geschwindigkeit relativ zu einer Beschichtungseinrichtung führbar sein. Während beim herkömmlichen Beschichtungsverfahren die Gebindetransportgeschwindigkeit von der Drehbewegung des Etikettiertellers fest vorgegeben war, ist die Gebindetransportgeschwindigkeit erfindungsgemäß an den Beschichtungsvorgang anpassbar. Dies ermöglicht vorteilhaft, den Gebindetransport in Hinsicht auf die Relativgeschwindigkeit zur Beschichtungseinrichtung optimal anpassen zu können.

Darüber hinaus kann beim erfindungsgemäßen Verfahren das Gebinde in einem beliebig wählbaren Abstand zur Beschichtungseinrichtung führbar sein. Während beim herkömmlichen Beschichtungsverfahren der Abstand des Gebindes zur Beschichtungseinrichtung von der Größe des Etikettierkarussells und der Positionierung der Beschichtungseinrichtung fest vorgegeben war, ist dieser Abstand erfindungsgemäß frei wählbar. So kann beispielsweise bei einem Wechsel zu einer anderen Gebindegröße durch die freie Wählbarkeit des Abstands des Gebindes zur Beschichtungseinrichtung ein aufwendiger Umbau oder eine Neujustierung eines Systemaggregats vorteilhaft vermieden werden. Dies kann durch eine einfache Programmanpassung bzw. -umstellung der Antriebssteuerung geschehen.

Schließlich kann ein Gebinde beim erfindungsgemäßen Verfahren derart führbar sein, dass sich die erste Drehachse der das Gebinde aufnehmenden Gebindeaufnahmeeinrichtung relativ zur Beschichtungseinrichtung für einen vorbestimmten Zeitraum nicht bewegt. Dies ist bei aufwendigen Etikettieraufgaben von Vorteil, da das Zeitfenster beispielsweise zum Umwickeln des Gebindes mit einem Rundumetikett gegenüber dem herkömmlichen Verfahren vergrößert werden kann. Somit werden erstmals auch schwierige Beschichtungsaufgaben, wie beispielsweise großflächiges Beschichten oder Beschreiben einer Gebindeumfangsoberfläche ermöglicht.

Die Erfindung wird nachfolgend in Ausführungsbeispielen anhand der Figuren der Zeichnung näher erläutert. Es zeigt:
- Fig. 1: eine schematische perspektivische Ansicht einer Ausführungsform einer erfindungsgemäßen Gebindehandhabungseinrichtung;
- Fig. 2: eine schematische perspektivische Ansicht einer weiteren Ausführungsform der erfindungsgemäßen Gebindehandhabungseinrichtung;
- Fig. 3: eine schematische perspektivische Ansicht einer weiteren Ausführungsform der erfindungsgemäßen Gebindehandhabungseinrichtung;
- Fig. 4: eine schematische perspektivische Ansicht einer Ausführungsform des erfindungsgemäßen Etikettiertellers;
- Fig. 5: eine schematische Draufsicht einer Ausführungsform der erfindungsgemäßen Etikettiermaschine; und
- Fig. 6: eine schematische Draufsicht einer Ausführungsform des erfindungsgemäßen Gebindebearbeitungszentrums.

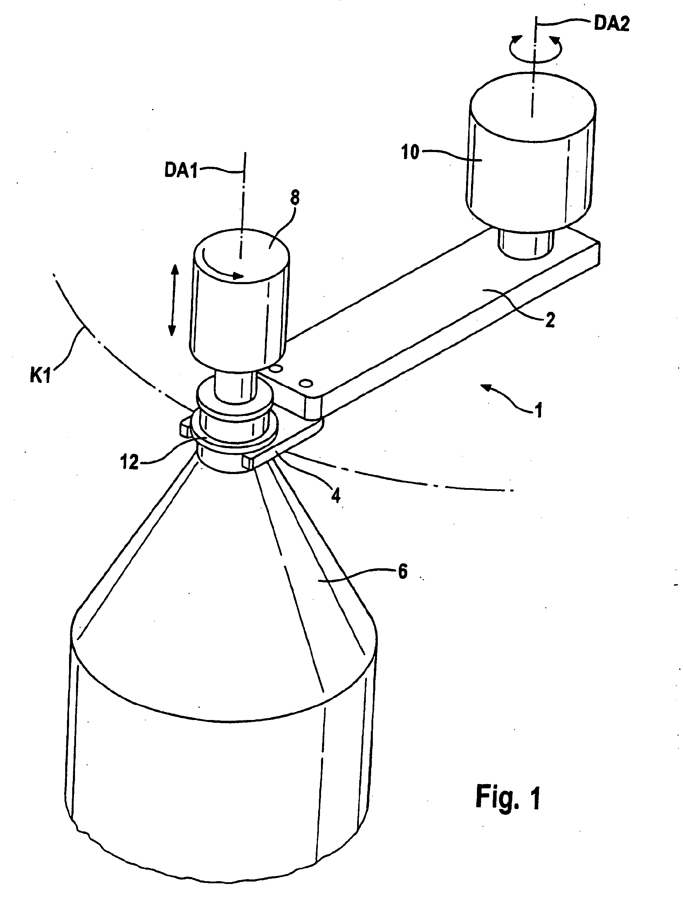

Die in Fig. 1 beispielhaft gezeigte Gebindehandhabungseinrichtung 1 weist als Koppelelement ein drehbar antreibbares Drehelement 2 und eine drehbar antreibbare Gebindeaufnahmeeinrichtung 4 auf. Ein von der Gebindeaufnahmeeinrichtung 4 getragenes Gebinde 6 kann von einer Antriebseinrichtung 8 um seine Hochachse drehend angetrieben werden. Hierbei erfolgt die Drehung des Gebindes 6 um eine erste Drehachse DA1, welche mit der Rotationsachse des Gebindes 6 zusammenfällt. Die Gebindeaufnahmeeinrichtung 4 ist mittels des Drehelements 2 auf einer konzentrisch zu einer zweiten Drehachse DA2 des Drehelements 2 beweglichen, ersten Kreisbahn K1 beliebig positionierbar. Dabei kann das Drehelement 2 mittels einer Antriebseinrichtung 10, vorzugsweise mittels eines Elektro- bzw. Hydraulikmotors und/oder eines zugeordneten mechanischen Getriebes, z.B. Kurvengetriebe drehend angetrieben werden.

Die Gebindeaufnahmeeinrichtung 4 dieser Ausführungsform ist als eine an sich bekannte Gebindehalsgabel ausgestaltet, wobei das Gebinde 6 an einer Schulter 12 am oberen Gebindeteil getragen wird (Neckhandling).

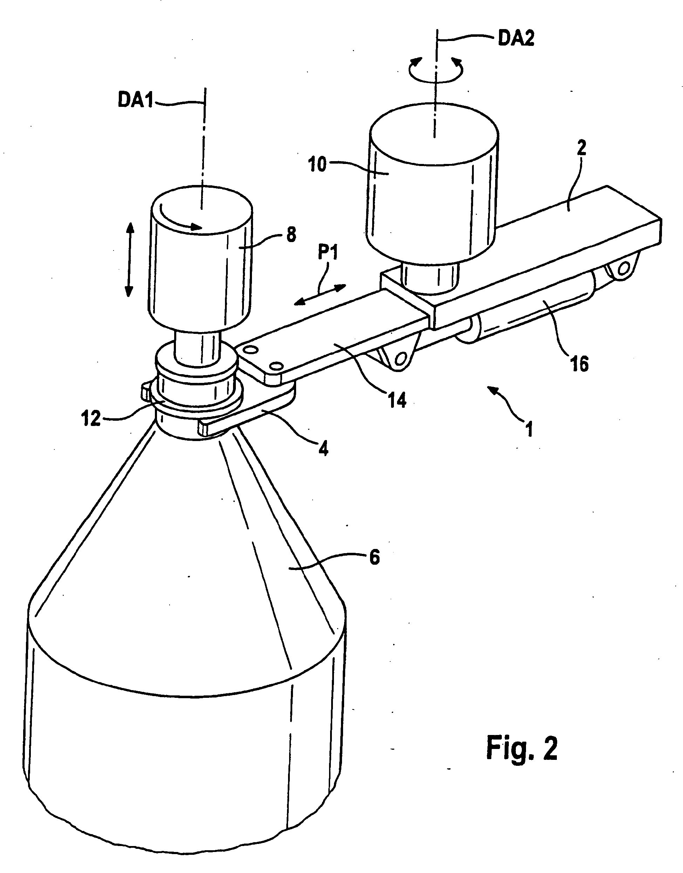

Die in Fig. 2 beispielhaft gezeigte, weitere Ausführungsform der Gebindehandhabungseinrichtung 1 weist in der steuerbaren Koppeleinrichtung neben den Merkmalen der vorstehend beschriebenen Ausführungsform noch ein Stützelement 14 auf, mittels dessen der Abstand der ersten Drehachse DA1 und der zweiten Drehachse DA2 veränderbar ist. Das Stützelement 14 ist mittels einer Antriebseinrichtung 16 in Richtung des Pfeils P 1 längenveränderbar, wobei die Antriebseinrichtung 16 vorzugsweise als ein Elektro- bzw. Hydraulikmotor, und/oder ein zugeordnetes Getriebe ausgebildet ist.

Durch die radiale Längenveränderung der Gebindehandhabungseinrichtung 1 ist die Positionierung der Gebindeaufnahmeeinrichtung 4 mittels des Drehelements 2 nicht auf die erste Kreisbahn K1 beschränkt, sondern kann eine Vielzahl von Kreisbahnen verwirklichen. Darüber hinaus erlaubt eine überlagerte Kombination einer Drehbewegung des Drehelements 2 und einer Linearbewegung des Stützelements 14 die Verwirklichung einer Vielzahl von Bewegungsformen, wie beispielsweise wenigstens abschnittsweise Kreis-, Ellipsen- und Linearbewegungen der Gebindeaufnahmeeinrichtung 4. Ferner sind erfindungsgemäß auch beliebige Kombinationen dieser Bewegungen und ggf. sogar ein vorübergehend ortsfester Stillstand der ersten Drehachse gegenüber der gestellfesten Umgebung möglich.

Ferner besteht bei der Aufnahme oder Abgabe des Gebindes 6 durch die Längenveränderung der Gebindehandhabungseinrichtung 1 die Möglichkeit, daß nach einer Aufwärtsbewegung der Antriebseinrichtung 8 vom Mundstück des Gebindes 6 die Gebindeaufnahmeeinrichtung 4 unter Vergrößerung des Abstands der ersten Drehachse DA 1 zur zweiten Drehachse DA2 bewegt wird. Dadurch kann ein möglicherweise störender Einfluß der Antriebseinrichtung 8 bei der Aufnahme oder Abgabe des Gebindes 6 verhindert werden.

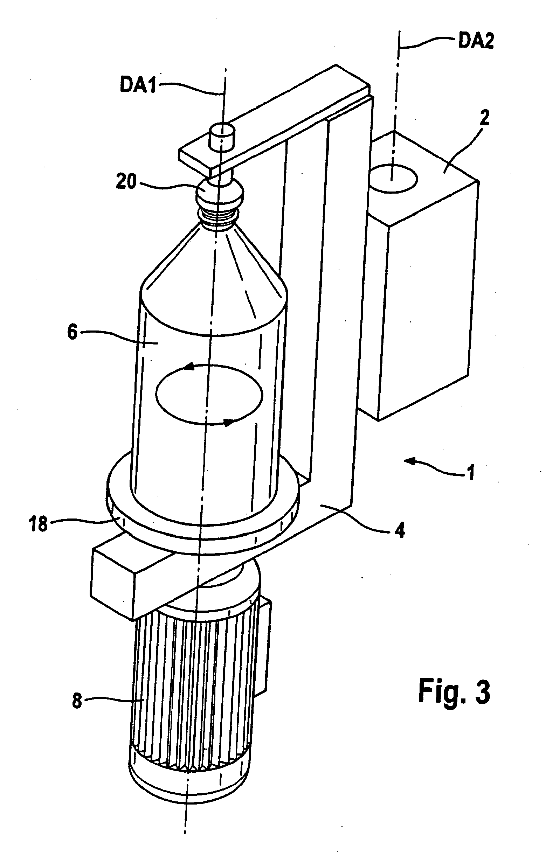

Fig. 3 zeigt eine weitere Ausführungsform der Gebindehandhabungseinrichtung 1. Abweichend von den vorstehend beschriebenen Ausführungsformen ist die Gebindeaufnahmeeinrichtung 4 als ein Gebindebodenteller 18 kombiniert mit einer Gebindehalstrageinrichtung 20 ausgestaltet, wobei ein Tragen des Gebindes durch Unterstützen des Gebindebodens verwirklicht wird (Basehandling). Zusätzlich wird das Gebinde 6 am oberen Gebindeteil getragen oder zentriert gehalten. In einer weiteren Abwandlung dieser Ausführungsform kann jedoch auf die Gebindehalstrageinrichtung 20 (nicht dargestellt) verzichtet werden. Die ggf. vorhandene Antriebseinrichtung 10 des Drehelements 2 ist in Fig. 3 nicht dargestellt.

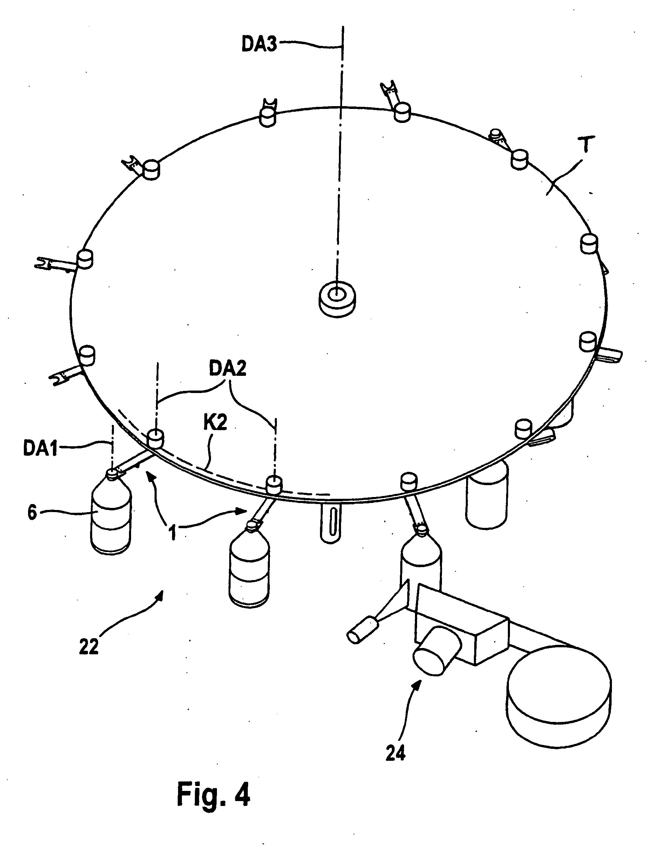

Das in Fig. 4 beispielhaft gezeigte erfindungsgemäße Etikettierkarussell 22 weist eine Mehrzahl von drehbar antreibbaren Gebindehandhabungseinrichtungen 1 auf. Das Etikettierkarussell 22 wird dabei kontinuierlich um eine dritte Drehachse DA3 drehbar angetrieben. Der Antrieb erfolgt dabei in herkömmlicher Weise.

Die Gebindehandhabungseinrichtungen 1 sind hinsichtlich deren jeweils zweiten Drehachse DA2 auf einer konzentrisch zur dritten Drehachse DA3 des Etikettierkarussells 22 angeordneten, zweiten Kreisbahn K2 positionierbar. Ferner sind die Gebindehandhabungseinrichtungen 1 hinsichtlich deren jeweiliger zweiter Drehachsen DA2 mit einer konstanten Kreisteilung auf der zweiten Kreisbahn K2 positioniert. Die Gebindehandhabungseinrichtungen 1 führen tragend jeweils ein Gebinde 6. Die Zuführung eines Gebindes 6 zu einer Gebindebeschichtungseinrichtung 24 ist in Fig. 4 beispielhaft gezeigt.

Bei dieser Ausführungsform ist die Gebindehandhabungseinrichtung 1 als die in Fig. 1 dargestellte Gebindehandhabungseinrichtung ausgebildet. In vorteilhaften Abwandlungen dieser Ausführungsform kann die Gebindehandhabungseinrichtung 1 auch als eine der vorstehend beschriebenen Ausführungsformen ausgebildet sein, wie sie beispielsweise in den Fig. 2 und 3 dargestellt sind.

Durch die überlagernden Bewegungen der Gebindehandhabungseinrichtung 1 und des Etikettierkarussells 22 kann quasi ein zeitweiliges "Anhalten" des Gebindes 6, d.h. eine relative Geschwindigkeit des Gebindes 6 gegenüber der Beschichtungseinrichtung 24 von null, eingestellt werden, selbst wenn das Etikettierkarussell 22 seine Drehung um die dritte Drehachse DA3 unterbrechungsfrei fortsetzt.

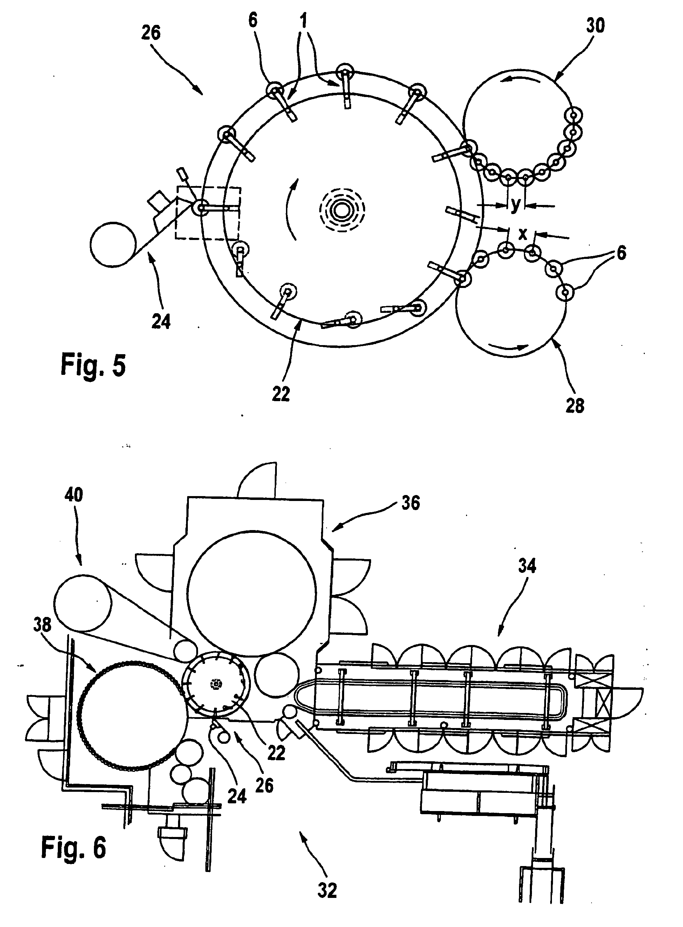

Fig. 5 stellt beispielhaft eine Ausführungsform der erfindungsgemäßen Etikettiermaschine 26 schematisch dar, wobei die Etikettiermaschine 26 das erfindungsgemäße Etikettierkarussell 22 mit einer Mehrzahl von Gebindehandhabungseinrichtungen 1, eine Beschichtungseinrichtung 24, eine Gebindezuführeinrichtung 28 und eine Gebindeabführeinrichtung 30 aufweist.

In der vorliegenden Ausführungsform der erfindungsgemäßen Etikettiermaschine 26 erfolgt die Zuführung der Gebinde 6 mittels der Gebindezuführeinrichtung 28. Dabei kann die Gebindezuführeinrichtung 28 beispielsweise als ein Einlaufstern mit einer Teilung X ausgebildet sein. Nach Aufnahme eines Gebindes 6 durch die Gebindeaufnahmeeinrichtung 4 der Gebindehandhabungseinrichtung 1 erfolgt der Transport des Gebindes 6 durch eine Drehbewegung des Etikettierkarussells 22, die mit einer gesteuerten Dreh- und/oder linearen Schiebebewegung der Koppeleinrichtung der Gebindehandhabungseinrichtung 1 kombiniert werden kann, zu einer oder mehrerer Beschichtungseinrichtungen 24, wobei in Fig. 5 nur eine Beschichtungseinrichtung 24 beispielhaft dargestellt ist. An der Beschichtungseinrichtung 24 erfolgt eine Beschichtung der Umfangsoberfläche des Gebindes 6 in Gestalt einer Aufbringung eines oder mehrerer Etikette auf die Umfangsoberfläche des Gebindes 6 oder in Gestalt einer Beschriftung/Bedruckung der Umfangsoberfläche des Gebindes 6 in herkömmlicher Weise.

Nach Abschluß des wenigstens einstufigen Beschichtungsvorgangs wird das Gebinde 6 durch eine Fortsetzung der vorstehend beschriebenen Drehbewegungen der Gebindehandhabungseinrichtung 1 und/oder des Etikettierkarussells 22 einer Gebindeabführeinrichtung 30 zugeführt und dieser übergeben. Dabei kann die Gebindeabführeinrichtung 30 beispielsweise als ein Auslaufstern mit einer Teilung Y ausgebildet sein. Hierbei ermöglich die Kombination der Bewegungen der erfindungsgemäßen Gebindehandhabungseinrichtung 1 und des erfindungsgemäßen Etikettierkarussells 22, dass die Aufnahme der Gebinde 6 von der Gebindezuführeinrichtung 28 mit der Teilung X erfolgt und die Abgabe der Gebinde 6 an die Gebindeabführeinrichtung 30 mit der Teilung Y erfolgt, wobei X und Y verschieden sein können.

Ein in Fig. 6 beispielhaft dargestelltes, erfindungsgemäßes Gebindebearbeitungszentrum 32 weist eine Gebindeherstellungseinrichtung mit einem Linearofen 34 und einer Blasmaschine 36, eine erfindungsgemäße Etikettiermaschine 26 mit einem erfindungsgemäßen Etikettierkarussell 22, einen Gebindefüller/-verschließer 38 und einen Gebindespeicher 40 auf. Die Aufstellung der einzelnen Aggregate ist dabei in Blockgestalt ausgeführt.

In der vorliegenden Ausführungsform werden die Gebinde 6 in herkömmlicher Weise durch Wärmebehandlung von Kunststoffrohlingen im Linearofen 34 und Streckblasen der erwärmten Rohlinge in der Blasmaschine 36 ausgebildet. Die derart hergestellten Gebinde 6 werden ohne den Einsatz von Transfersternen oder dergleichen von den Gebindehandhabungseinrichtungen 1 des erfindungsgemäßen Etikettierkarussells 22 aufgenommen, wobei die Gebindehandhabungseinrichtungen 1 derart gesteuert werden, dass sie bei der Aufnahme der Gebinde 6 an die Teilung der Blasmaschine 36 angepasst sind. Anschließend werden die Gebinde 6 in der vorstehend beschriebenen Weise mittels der erfindungsgemäßen Etikettiermaschine 26 beschichtet.

Nach Abschluß des Beschichtungsvorgangs werden die beschichteten Gebinde 6 ohne den Einsatz von Transfersternen oder dergleichen von den Gebindehandhabungseinrichtungen 1 des erfindungsgemäßen Etikettierkarussells 22 an den Gebindefüller/-verschließer 38 übergeben, wobei die Gebindehandhabungseinrichtungen 1 derart gesteuert werden, dass sie bei der Abgabe der Gebinde 6 an die Teilung des Gebindefüllers angepasst sind. Innerhalb des Gebindefüllers/-verschließers 38 werden die Gebinde 6 in herkömmlicher Weise befüllt und verschlossen. Abweichend von der vorstehend beschriebenen Gebindehandhabung kann das Befüllen und Verschließen der Gebinde 6 auch vor dem Beschichtungsvorgang ausgeführt werden.

Wie ferner in Fig. 6 beispielhaft dargestellt, ist an die Etikettiermaschine 26 ein Gebindespeicher 40 angeschlossen. Tritt beispielsweise eine Störung an einer Beschichtungseinrichtung 24 der Etikettiermaschine 26 oder am Gebindefüller/- verschließer 38 auf, können die vom Linearofen 34 und der Blasmaschine 36 hergestellten Gebinde 6 nach Aufnahme durch die Gebindehandhabungseinrichtungen 1 des Etikettierkarussells 22 an der Beschichtungseinrichtung 24 vorbei geführt werden. Weiter können die Gebinde 6 ohne Übergabe an den Gebindefüller/-verschließer 38 unmittelbar dem Gebindespeicher 40 zugeführt werden, wobei die jeweilige Gebindehandhabungseinrichtung 1 derart gesteuert wird, dass sie vor der Übergabe an den Gebindespeicher 40 auf dessen Teilung geschwenkt wird.

Die Entleerung des Gebindespeichers 40 erfolgt analog seiner Befüllung durch Aufnahme der Gebinde 6 mittels der Gebindehandhabungseinrichtungen 1 des Etikettierkarussells 22 der Etikettiermaschine 26. Im weiteren Ablauf können die Gebindehandhabungseinrichtungen 1 die Schnittstellen der übrigen Systemaggregate je nach Bedarf anfahren. So können die Gebinde 6 beispielsweise unter Vorbeiführen an der Blasmaschine 36 einer oder mehrerer Gebindebeschichtungseinrichtungen 24 und/oder dem Gebindefüller/-verschließer 38 zugeführt werden.

Mit Hilfe des Gebindespeichers 40 wird somit ein vorteilhaftes Weiterführen kontinuierlicher verfahrenstechnischer Prozesse, wie beispielsweise das Entleeren des Linearofens 34 bzw. der Blasmaschine 36, ermöglicht, falls eine oder mehrere Störungen in einem der übrigen Aggregate des erfindungsgemäßen Gebindebearbeitungszentrums 32 auftreten. Ferner kann die Fertigungseffizienz des Gebindebearbeitungszentrums 32 durch Ermöglichung eines Pufferbetriebs mittels des Gebindespeichers 40 vorteilhaft gesteigert werden.

Die Erfindung lässt neben den erläuterten Ausführungsbeispielen weitere Gestaltungsansätze zu.

So können beispielsweise als Antriebseinrichtungen 8 bzw. 10 anstatt Elektro- oder Hydraulikmotoren auch weitere Einrichtungen, wie beispielsweise Riemenantriebe, Friktionsantriebe oder dergleichen vorgesehen werden. Die vorgesehenen Antriebsvorrichtungen können gegebenenfalls separat pro Gebinde gesteuert werden.

Anstelle einer Ausgestaltung der Gebindezuführeinrichtung 28 als Einlaufstern bzw. der Gebindeabführeinrichtung 30 als Auslaufstern ist auch eine Ausgestaltung derselben als Ein- bzw. Auslaufschnecken möglich.

Ferner ist es möglich, aufgrund der Merkmale des erfindungsgemäßen Etikettiertellers 22 auf die Gebindezuführeinrichtung 28 und/oder auf die Gebindeabführeinrichtung 30 zu verzichten.

Weiter kann die über einem Mundstück des Gebinde angeordnete Antriebvorrichtung, welche die Eigendrehung des Gebindes bewirkt, bei der Aufnahme oder Abgabe des Gebindes oder während der weiteren Gebindehandhabung von der Gebindeaufnahmevorrichtung entfernbar sein. Dadurch wird ein Schwenken der Gebindeaufnahmevorrichtung der erfindungsgemäßen Gebindehandhabungseinrichtung unter den Etikettierteller oder in die Nähe eine Vorrichtung einer weiteren Systemkomponenten störungsfrei ermöglicht.

Bei einer beispielhaften Ausführungsform können die Etiketten (nachfolgend als Folie beschrieben) auf einer Rolle gewickelt sein. Der Rollenaufnahmedorn wird durch einen Servoantrieb angetrieben bzw. auf die geforderte Folienbandgeschwindigkeit beschleunigt. Die Folie läuft durch ein Tänzerwalzensystem, welches die Bandspannung aufrecht erhält und teilweise als Folienpuffer fungiert. Eine vor- oder nachgeschaltete Bandlaufsteuerung soll den Folienbandlauf in der Höhe stabilisieren. Anschließend läuft die Folie auf ein Vakuum- band mit integrierten Servoantrieb. Eine Rolle angetrieben oder nicht angetrieben unterstützt den Transport der Folie zum Gebinde bzw. Behälter. Ein Vakuum hinter dem Vakuumband gewährleistet eine sichere Mitnahme der Folie durch das Band. Das Vakuumbandmodul kann bei Bedarf mit einer Linearachse und einem Drehlager ausgestattet werden. Die Linearachse kann sich oszillierend bewegen und dadurch das Gebinde bzw. den Behälter während des Schweißens bzw. Schneidens mittels eines Lasers begleiten und sich anschließend wieder in die Ausgangsstellung bewegen. Über den Drehpunkt kann die Folie mehr oder weniger an den Behälter angepresst werden bzw. für die Einstellung des Vakuummoduls auf unterschiedliche Behälterdurchmesser verwendet werden.

Die Folie wird auf den vor der Beschichtungseinrichtung bzw. dem Aggregat stehenden und um eigene Achse rotierenden Behälter gespendet. Der Anfang der Folie wird mit Lasertechnik an der Behälteroberfläche fixiert, dies erfolgt während der Rotation des Behälters. Das Folienband wird um den Behälter gewickelt, eine Bürste kann die Folienspannung während des Wickelvorganges aufrechterhalten. Eine gegenüber angeordnete Rolle kann den Wickeldruck bzw. den Gegendruck vom Vakuumbandmodul abfangen, die Rolle kann nach Bedarf wegschwenkbar sein.

Nachdem das Folienband einmal um das Gebinde bzw. den Behälter gewickelt ist, wird das Folienband mit dem Folienanfang verschweißt und gleichzeitig geschnitten. Alternativ besteht die Möglichkeit, dass das Folienband mit dem Folienanfang erst verschweißt und anschließend durch den Laser geschnitten wird, je nach Folienart und deren Zusammensetzung; dies erfolgt während der Eigenrotation des Behälters.

Dabei sind z.B. nachfolgende Etikettiermöglichkeiten denkbar: überlappende Ausführung, d.h. der Folienanfang wird durch das Folienende überdeckt verschweißt; eine Ausführung mit einem Stoß bzw. Spalt: das Folienende überlappt nicht den Folienanfang, sondern wird mit einem Stoß oder Spalt mit der Gebindeumfangs- bzw. Behälteroberfläche verschweißt; eine Ausführung mit zwei Etiketten, bei der zwei Folienteile auf die Behälteroberfläche mit oder ohne einem Stoß bzw. Spalt verschweißt werden. Durch diese Art der Etikettierung ist die Etikettenlaufrichtung (links/rechts) nicht mehr relevant, da durch die Drehrichtung des Behälter (mit oder gegen den Uhrzeigersinn) das Etikett auf den Behälter gespendet werden kann.

## Patentansprüche

1. Gebindehandhabungseinrichtung (1) mit einer um eine erste Drehachse (DA1) drehbar antreibbaren Gebindeaufnahmeeinrichtung (4) zum drehbar tragenden Führen von Gebinden (6), wobei die erste Drehachse (DA1) mit einer Rotationsachse des mittels der Gebindeaufnahmeeinrichtung (4) drehbar antreibbaren Gebindes (6) zusammenfällt und entlang einer geschlossenen Umlaufbahn führbar ist, **dadurch gekennzeichnet, dass** die Gebindehandhabungseinrichtung (1) mittels einer gesteuert betätigbaren Koppeleinrichtung an einem um eine Drehachse (DA3) umlaufenden Träger (T) derart gelagert ist, dass die erste Drehachse (DA1) sowohl bezüglich ihrer radialen als auch umfänglichen Position relativ zum umlaufenden Träger gesteuert verlagerbar ist, wobei ihre Umlaufbahn zumindest abschnittsweise von einer Kreisbogenform abweichend ausführbar ist.

2. Gebindehandhabungseinrichtung nach Anspruch 1, **dadurch gekennzeichnet, dass** die radiale Position und die umfängliche Position der ersten Drehachse (DA1) der Gebindehandhabungseinrichtung jeweils unabhängig voneinander relativ zum Träger (T) steuerbar sind.

3. Gebindehandhabungseinrichtung nach Anspruch 1 oder 2, **dadurch gekennzeichnet, dass** der Träger (T) mit gleichbleibendem Umläufsinn kontinuierlich um seine Drehachse (DA3) antreibbar ist, während insbesondere die umfängliche Position der ersten Drehachse (DA1) auf ihrer Umlaufbahn diskontinuierlich verlagerbar ist.

4. Gebindehandhabungseinrichtung nach wenigstens einem der vorhergehenden Ansprüche, **dadurch gekennzeichnet, dass** sie um eine zweite Drehachse (DA2) drehbar antreibbar ist, wobei die zweite Drehachse (DA2) der Gebindehandhabungseinrichtung (1) von der ersten Drehachse (DA1) der Gebindeaufnahmeeinrichtung (4) beabstandet ist, die zweite Drehachse (DA2) auf einer zweiten, insbesondere als Kreisbahn ausgebildeten, Bahn (K2) um eine dritte Drehachse (DA3) positionierbar ist, und wobei die erste Drehachse (DA1), die zweite Drehachse (DA2) und die dritte Drehachse (DA3) parallel zueinander orientierbar sind.

5. Gebindehandhabungseinrichtung (1) nach Anspruch 4, **dadurch gekennzeichnet, dass** die Gebindehandhabungseinrichtung (1) ein zwischen der ersten Drehachse (DA1) und der zweiten Drehachse (DA2) angeordnetes Stützelement (14) aufweist.

6. Gebindehandhabungseinrichtung (1) nach Anspruch 5, **dadurch gekennzeichnet, dass** mittels des Stützelements (14) der Abstand zwischen der ersten Drehachse (DA1) und der zweiten Drehachse (DA2) veränderbar ist.

7. Gebindehandhabungseinrichtung (1) nach einem der Ansprüche 1 bis 6, **dadurch gekennzeichnet dass** die Gebindeaufnahmeeinrichtung (4) als Gebindehalsgabel ausgebildet ist.

8. Gebindehandhabungseinrichtung (1) nach einem der Ansprüche 1 bis 6, **dadurch gekennzeichnet, dass** die Gebindeaufnahmeeiinichtung (4) als Gebindebodenteller ausgebildet ist

9. Gebindehandhabungseinrichtung (1) nach einem der Ansprüche 1 bis 8, **dadurch gekennzeichnet, dass** ein drehbar antreibbares Drehelement (2) der Gebindehandhabungseinrichtung (1) als Schwenkarm ausgebildet ist.

10. Etikettierkarussell (22), mit einer Rotationsachse, die mit einer dritten Drehachse (DA3) zusammenballt, wobei das Etikettierkarussell (22) um diese dritte Drehachse (DA3) drehbar antreibbar ist, mit:
einer Mehrzahl von drehbar antreibbaren Gebindeaufnahmeeinrichtungen (4) zum drehbar tragenden Führen von Gebinden (6), wobei eine erste Drehachse (DA1) mit der Rotationsachse des mittels der Gebindeaufnahmeeinrichtung (4) drehbar antreibbaren Gebindes (6) zusammenfällt, wobei die Gebindeaufnahmeeinrichtungen (4) hinsichtlich deren jeweiliger erster Drehachse (DA1) vorzugsweise auf einer konzentrisch zur dritten Drehachse (DA3) des Etikettiertellers (22) angeordneten, zweiten Kreisbahn (K2) positionierbar sind, und wobei die Gebindeaufnahmeeinrichtungen (4) hinsichtlich deren jeweiliger erster Drehachse (DA1) mit einer konstanten Kreisteilung auf der zweiten Kreisbahn (K2) positionierbar sind, **dadurch gekennzeichnet, dass** das Etikettierkarussell (22) wenigstens eine Gebindehandhabungseinrichtung (1), insbesondere nach wenigstens einem der Ansprüche 1 bis 6, aufweist, wobei die drehbar antreibbaren Gebindeaufnahmeeinrichtungen (4) der Gebindehandhabungseinrichtung (1) auf einer konzentrisch zur zweiten Drehachse (DA2) der Gebindehandhabungseinrichtung (1) beweglichen, ersten Kreisbahn (K1) beliebig positionierbar sind.

11. Etikettiermaschine (26) mit wenigstens einer Gebindehandhabungseinrichtung (1) nach einem der Ansprüche 1 bis 9.

12. Etikettiermaschine (26) mit einem drehbar antreibbaren Etikettierkarussell (22) nach Anspruch 10.

13. Etikettiermaschine (26) nach einem der Ansprüche 11 oder 12, **dadurch gekennzeichnet, dass** die Etikettiermaschine (26) wenigstens eine Beschichtungseinrichtung (24), vorzugsweise eine Etikettenaufbringungseinrichtung und/oder eine Gebindebeschriflungseinrichtung, aufweist.

14. Gebindebearbeitungszentrum (32) mit einer Gebindeherstellungseinrichtung (34, 36) und einem Gebindefüller/-verschließer (38), **dadurch gekennzeichnet, dass** das Gebindebearbeitungszentrum (32) ferner wenigstens eine Etikettiermaschine (26) nach wenigstens einem der Ansprüche 11 bis 13 mit einem drehbar antreibbaren Etikettierkarussell (22) nach Anspruch 10 aufweist.

15. Gebindebearbeitungszentrum (32) nach Anspruch 14, **dadurch gekennzeichnet, dass** das Etikettierkarussell (22) der Etikettiermaschine (26) zur direkten Blockung des Gebindebearbeitungszentmms (32) ohne zwischengeschaltete Gebindetransferelemente verwendbar ist.

16. Gebindebearbeitungszentrum (32) nach Anspruch 14 oder 15, ferner mit einem Gebindespeicher (40).

17. Verfahren zum Beschichten der Umfangsoberfläche von Gebinden (6) mit den Schritten:
- Zuführen einer Mehrzahl von Gebinden (6) zur Etikettiermaschine (26) nach wenigstens einem der Ansprüche 11 bis 13;
- Aufnahme der Gebinde (6) am Etikettierkarussell (22) nach Anspruch 10;
- Zuführen der Gebinde (6) zu wenigstens einer Beschichtungseinrichtung (24);
- Beschichtung der Gebinde (6) mittels wenigstens einer Beschichtungseinrichtung (24); und
- Abführen der Gebinde (6) aus der Etikettiermaschine (24).

18. Verfahren zum Beschichten der Umfangsoberfläche von Gebinden (6) nach Anspruch 17, wobei das Gebinde (6) auf einer Bahn geführt wird, die durch eine Drehbewegung des Etikettierkarussells (22) und eine dazu überlagerte Relativbewegung der Gebindehandhabungseinrichtung (1) nach wenigstens einem der Ansprüche 1 bis 9 bestimmt wird.

19. Verfahren zum Beschichten der Umfangsoberfläche von Gebinden (6) nach Anspruch 17 oder 18, wobei das Gebinde (6) in einer beliebig wählbaren Geschwindigkeit relativ zur Beschichtungseinrichtung (24) führbar ist.

20. Verfahren zum Beschichten der Umfangsoberfläche von Gebinden (6) nach wenigstens einem der Ansprüche 17 bis 19, wobei das Gebinde (6) in einem beliebig wählbaren Abstand zur Beschichtungseinrichtung (24) führbar ist.

21. Verfahren zum Beschichten der Umfangsoberfläche von Gebinden (6) nach wenigstens einem der Ansprüche 17 bis 20, wobei das Gebinde (6) derart führbar ist, dass die erste Drehachse (DA1) der das Gebinde aufnehmenden Gebindeaufnahmeeinrichtung (4) relativ zur Beschichtungseinrichtung (24) für einen vorbestimmten Zeitraum ortsfest verharrt.

## Claims

1. Container handling device (1) comprising a container holding device (4) driven in rotation about a first axis of rotation (DA1) for supporting and rotatably guiding containers (6), wherein the first axis of rotation (DA1) coincides with an axis of rotation of the container (6) driven in rotation by means of the container holding device (4) and can be guided along a closed path of rotation, **characterised in that** the container handling device (1) is mounted on a carrier (T) rotating about an axis of rotation (DA3) by means of a coupling device actuated in a controlled manner, such that both the radial and circumferential positions of the first axis of rotation (DA1) can be displaced in a controlled manner relative to the rotating carrier, wherein its path of rotation may deviate from a circular arc shape at least in some areas.

2. Container handling device according to claim 1, **characterised in that** the radial position and the circumferential position of the first axis of rotation (DA1) of the container handling device can each be controlled independently of one another relative to the carrier (T).

3. Container handling device according to claim 1 or claim 2, **characterised in that** the carrier (T) can be driven continuously about its axis of rotation (DA3) in a constant direction, while, in particular, the circumferential position of the first axis of rotation (DA1) can be displaced discontinuously on its path of rotation.

4. Container handling device according to at least one of the preceding claims, **characterised in that** it can be driven in rotation about a second axis of rotation (DA2), wherein the second axis of rotation (DA2) of the container handling device (1) is situated at a distance from the first axis of rotation (DA1) of the container holding device (4), the second axis of rotation (DA2) can be positioned on a second, in particular, circular path (K2) about a third axis of rotation (DA3) and the first axis of rotation (DA1), the second axis of rotation (DA2) and the third axis of rotation (DA3) can be oriented parallel to one another.

5. Container handling device (1) according to claim 4, **characterised in that** the container handling device (1) comprises a supporting element (14) arranged between the first axis of rotation (DA1) and the second axis of rotation (DA2).

6. Container handling device (1) according to claim 5, **characterised in that** the distance between the first axis of rotation (DA1) and the second axis of rotation (DA2) can be varied by means of the supporting element (14).

7. Container handling device (1) according to one of claims 1 to 6, **characterised in that** the container holding device (4) is designed as a container neck fork.

8. Container handling device (1) according to one of claims 1 to 6, **characterised in that** the container holding device (4) is designed as a container base plate.

9. Container handling device (1) according to one of claims 1 to 8, **characterised in that** a rotating element (2) of the container handling device (1) driven in rotation is designed as a swivel arm.

10. Labelling carousel (22) comprising an axis of rotation coinciding with a third axis of rotation (DA3), wherein the labelling carousel (22) can be driven in rotation about this third axis of rotation (DA3), comprising:
a plurality of container holding devices (4) driven in rotation for supporting and rotatably guiding containers (6), wherein a first axis of rotation (DA1) coincides with the axis of rotation of the container (6) driven in rotation by means of the container holding device (4), the first axes of rotation (day) of the respective container holding devices (4) can preferably be positioned on a second circular path (K2) arranged concentrically with the third axis of rotation (DA3) of the labelling carousel (22) and the first axes of rotation (DA1) of the respective container holding devices (4) can be positioned on the second circular path (K2) with a uniform circular pitch, **characterised in that** the labelling carousel (22) comprises at least one container handling device (1), in particular according to at least one of claims 1 to 6, wherein the container holding devices (4) of the container handling device (1) driven in rotation can be positioned as desired on a first circular path (K1) movable concentrically with the second axis of rotation (DA2) of the container handling device (1).

11. Labelling machine (26) comprising at least one container handling device (1) according to one of claims 1 to 9.

12. Labelling machine (26) comprising a labelling carousel (22) driven in rotation according to claim 10.

13. Labelling machine (26) according to either of claims 11 or 12, **characterised in that** the labelling machine (26) comprises at least one coating device (24), preferably a label applicator and/or a container lettering device.

14. Container machining centre (32) comprising a container manufacturing device (34, 36) and a container filler/sealer (38), **characterised in that** the container machining centre (32) further comprises at least one labelling machine (26) according to at least one of claims 11 to 13 comprising a labelling carousel (22) driven in rotation according to claim 10.

15. Container machining centre (32) according to claim 14, **characterised in that** the labelling carousel (22) of the labelling machine (26) can be used for direct blocking of the container machining centre (32) without intermediate container transfer elements.

16. Container machining centre (32) according to claim 14 or claim 15, further comprising a container store (40).

17. Method of coating the circumferential surfaces of containers (6), comprising the steps of:
- feeding a plurality of containers (6) to the labelling machine (26) according to at least one of claims 11 to 13;
- holding the containers (6) on the labelling carousel (22) according to claim 10;
- feeding the containers (6) to at least one coating device (24);
- coating the containers (6) by means of at least one coating device (24), and
- removing the containers (6) from the labelling machine (24).

18. Method of coating the circumferential surfaces of containers (6) according to claim 17, wherein the container (6) is guided on a path determined by a rotational movement of the labelling carousel (22) and a superimposed relative movement of the container handling device (1) according to at least one of claims 1 to 9.

19. Method of coating the circumferential surfaces of containers (6) according to claim 17 or claim 18, wherein the container (6) can be guided relative to the coating device (24) at any desired speed.

20. Method of coating the circumferential surfaces of containers (6) according to at least one of claims 17 to 19, wherein the container (6) can be guided at any desired distance from the coating device (24).

21. Method of coating the circumferential surfaces of containers (6) according to at least one of claims 17 to 20, wherein the container (6) can be guided in such a manner that the first axis of rotation (DA1) of the container holding device (4) holding the container can be held fixed in position relative to the coating device (24) for a predetermined period of time.

## Revendications

1. Installation de manutention de conditionnements (1) comportant une installation de réception de conditionnement (4) entraînée en rotation autour d'un premier axe de rotation (DA1) pour guider des conditionnements (6) en les portant en rotation,
- le premier axe de rotation (DA1) coïncidant avec l'axe de rotation du conditionnement (6) entraîné en rotation par l'installation de réception de conditionnement (4) et guidé le long d'une trajectoire circulaire fermée,
installation de manutention de conditionnements (1), **caractérisée en ce qu'**
elle est montée par une installation de couplage commandée sur un support (T) tournant autour d'un axe de rotation (DA3) de façon que le premier axe de rotation (DA1) puisse être déplacé de manière commandée par rapport au support tournant à la fois pour sa position radiale et sa position périphérique, et au moins par segment sa trajectoire circulaire étant différente d'un arc de cercle.

2. Installation de manutention de conditionnements selon la revendication 1,
**caractérisée en ce que**
la position radiale et la position périphérique du premier axe de rotation (DA1) de l'installation de manutention de conditionnements sont commandées chacune indépendamment l'une de l'autre par rapport au support (T).

3. Installation de manutention de conditionnements selon la revendication 1 ou 2,
**caractérisée en ce que**
le support (T) est entraîné en continu suivant un sens de rotation identique autour de son axe de rotation (DA3) alors que notamment la position initiale du premier axe de rotation (DA1) est déplacée de manière discontinue sur sa trajectoire de circulation.

4. Installation de manutention de conditionnements selon au moins l'une des revendications précédentes,
**caractérisée en ce qu'**
elle peut être entraînée en rotation autour d'un second axe de rotation (DA2),
- le second axe de rotation (DA2) de l'installation de manutention de conditionnements (1) étant écarté du premier axe de rotation (DA1) de l'installation de réception de conditionnement (4), le second axe de rotation (DA2) pouvant être positionné autour d'un troisième axe de rotation (DA3) sur une seconde trajectoire circulaire (K2), notamment une trajectoire circulaire, et
- le premier axe de rotation (DA1), le second axe de rotation (DA2) et le troisième axe de rotation (DA3) sont parallèles.

5. Installation de manutention de conditionnements selon la revendication 4,
**caractérisée en ce qu'**
elle (1) comporte un élément d'appui (14) entre le premier axe de rotation (DA1) et le second axe de rotation (DA2).

6. Installation de manutention de conditionnements selon la revendication 5,
**caractérisée en ce que**
l'élément d'appui (14) permet de modifier la distance entre le premier axe de rotation (DA1) et le second axe de rotation (DA2).

7. Installation de manutention de conditionnements selon l'une des revendications 1 à 6,
**caractérisée en ce que**
l'installation de réception de conditionnement (4) est en forme de fourche pour recevoir le col d'un conditionnement.

8. Installation de manutention de conditionnements selon l'une des revendications 1 à 6,
**caractérisée en ce que**
l'installation de réception de conditionnement (4) est un disque pour recevoir le fond d'un conditionnement.

9. Installation de manutention de conditionnements selon l'une des revendications 1 à 8,
**caractérisée en ce qu'**
un élément de rotation (2) susceptible d'être entraîné en rotation de l'installation de manutention de conditionnements (1), est un bras pivotant.

10. Carrousel d'étiquetage (22) comportant un axe de rotation coïncidant avec le troisième axe de rotation (DA3),
- le carrousel d'étiquetage (22) étant entraîné en rotation autour du troisième axe de rotation (DA3) et comprenant :
- un ensemble d'installations de réception de conditionnement (4) entraînées en rotation pour guider les conditionnements (6) en les portant en rotation,
- un premier axe de rotation (DA1) coïncidant avec l'axe de rotation du conditionnement (6) susceptible d'être entraîné en rotation par l'installation de réception de conditionnement (4),
- le premier axe respectif (DA1) des installations de réception de conditionnement (4) pouvant être positionné avec de préférence sur une seconde trajectoire circulaire (K2) concentrique au troisième axe de rotation (DA3) du plateau d'étiquetage (22), et
- le premier axe de rotation (DA1) des installations de réception de conditionnement (4) pouvant être positionné avec une division circulaire constante sur la seconde trajectoire circulaire (K2),
carrousel d'étiquetage (22) **caractérisé en ce qu'** il comporte au moins une installation de manutention de conditionnements (1), notamment selon au moins l'une des revendications 1 à 6,
- les installations de réception de conditionnement (4) susceptibles d'être entraînées en rotation de l'installation de manutention de conditionnements (1) pouvant être positionnées de manière quelconque sur une première trajectoire circulaire (K1), mobile, concentrique au second axe de rotation (DA2) de l'installation de manutention de conditionnements (1).

11. Machine d'étiquetage (26) comportant au moins une installation de manutention de conditionnements selon l'une des revendications 1 à 9.

12. Machine d'étiquetage (26) comportant un carrousel d'étiquetage (22) susceptible d'être entraîné en rotation selon la revendication 10.

13. Machine d'étiquetage (26) selon l'une des revendications 11 ou 12, **caractérisée en ce qu'**
elle (26) comporte au moins une installation de revêtement (24), de préférence une installation d'étiquetage et/ou une installation d'inscription sur le conditionnement.

14. Centre de traitement de conditionnements (32) comportant une installation de réalisation de conditionnements (34, 36) et un dispositif de remplissage et d'obturation de conditionnements (38),
centre de traitement de conditionnements (32) **caractérisé en ce qu'** il comporte en outre au moins une machine d'étiquetage (26) selon au moins l'une des revendications 11 à 13 avec un carrousel d'étiquetage (22) susceptible d'être entraîné en rotation selon la revendication 10.

15. Centre de traitement de conditionnements (32) selon la revendication 14,
**caractérisé en ce que**
le carrousel d'étiquetage (22) de la machine d'étiquetage (26) est applicable pour le blocage direct du centre de traitement de conditionnements (32) sans interposer d'élément de transfert de conditionnement.

16. Centre de traitement de conditionnements (32) selon la revendication 14 ou 15, comportant en outre un magasin à conditionnements (40).

17. Procédé de revêtement de la surface périphérique de conditionnements (6) comprenant les étapes suivantes consistant à :
- fournir un ensemble de conditionnements (6) à la machine d'étiquetage (26) selon au moins l'une des revendications 11 à 13,
- recevoir les conditionnements (6) sur un carrousel d'étiquetage (22) selon la revendication 10,
- fournir les conditionnements (6) à au moins une installation de revêtement (24),
- revêtir les conditionnements (6) avec au moins une installation de revêtement (24), et
- évacuer les conditionnements (6) hors de la machine d'étiquetage (26).

18. Procédé de revêtement de la surface périphérique de conditionnements (6) selon la revendication 17,
selon lequel
on guide le conditionnement (6) sur une trajectoire circulaire définie par un mouvement de rotation du carrousel d'étiquetage (22) et d'un mouvement relatif combiné de l'installation de manutention de conditionnements (1) selon au moins l'une des revendications 1 à 9.

19. Procédé de revêtement de la surface périphérique de conditionnements (6) selon la revendication 17 ou 18,
selon lequel
on guide le conditionnement (6) suivant une vitesse sélectionnée librement par rapport à l'installation de revêtement (24).

20. Procédé de revêtement de la surface périphérique de conditionnements (6) selon au moins l'une des revendications 17 à 19,
selon lequel
on guide le conditionnement (6) à une distance quelconque sélectionnée par rapport à l'installation de revêtement (24).

21. Procédé de revêtement de la surface périphérique de conditionnements (6) selon au moins l'une des revendications 17 à 20,
selon lequel
le conditionnement (6) peut être guidé de façon que le premier axe de rotation (DA1) de l'installation de réception de conditionnement (4) recevant le conditionnement, puisse rester fixe pendant une durée déterminée par rapport à l'installation de revêtement (24).
